# FASCICULE DE BREVET EUROPEEN

(11) **EP 3 084 506 B1**
(45) Date de publication et mention de la délivrance du brevet: **08.05.2019**
(21) Numéro de dépôt: 14827814.6
(22) Date de dépôt: 10.12.2014
(51) Int. Cl.: G02B 23/24, G01N 29/14

(54) **ENDOSCOPE ET PROCEDE POUR SON UTILISATION**
ENDOSKOP UND VERFAHREN ZUR VERWENDUNG DAVON
ENDOSCOPE AND METHOD FOR USING SAME

(30) Priorité: 20.12.2013 FR 1363338
(43) Date de publication de la demande: 26.10.2016
(73) Titulaire: Safran Helicopter Engines, 64510 Bordes (FR)
(72) Inventeur: SEGURA, Frédéric, F-64230 Lescar (FR); CAETANO, Francis, F-64260 Arudy (FR); ELGOYHEN, Thibault, F-64110 St Faust (FR); MEZIERE, Ludovic, F-65110 Cauterets (FR)
(74) Mandataire: Calvo de Nó, Rodrigo
(86) Numéro de dépôt international: PCT/FR2014/053249
(87) Numéro de publication internationale: WO 2015/092221

(56) Documents cités:
- EP-A1- 2 596 753
- EP-A1- 2 623 015
- WO-A1-2013/018519
- GB-A- 2 358 753
- GB-A- 2 469 286
- US-A- 5 301 061
- US-A1- 2012 099 735

## Description

### Arrière-plan de l'invention

La présente invention concerne le domaine du contrôle de pièces mécaniques, et en particulier le contrôle de pièces mécaniques difficilement accessibles.

L'homme du métier connaît l'utilisation d'endoscopes pour le contrôle visuel de pièces mécaniques difficilement accessibles. Un endoscope, tel qu'utilisé dans la mécanique, le bâtiment, mais aussi la médecine, comprend typiquement une tête endoscopique, un dispositif d'affichage d'images captées à travers ladite tête endoscopique, et un organe allongé relié à la tête endoscopique. Ainsi, la tête endoscopique peut être insérée à travers un orifice étroit et guidée moyennant l'organe allongé vers un sujet d'inspection pour procéder à une inspection visuelle à travers la tête endoscopique et le dispositif d'affichage. On connaît, parmi ces endoscopes, des endoscopes rigides, mais aussi des endoscopes flexibles pour contourner des obstacles dans la trajectoire de la tête endoscopique. En outre, on connaît aussi des endoscopes optiques, dans lesquels la tête endoscopique est reliée au dispositif d'affichage par au moins une fibre optique transmettant directement la lumière captée par la tête endoscopique, et des endoscopes vidéo, dans lesquels la tête endoscopique comprend un capteur vidéo connecté, par connexion filaire ou sans fil, au dispositif d'affichage. En outre, un tel endoscope est normalement aussi équipé d'un dispositif d'éclairage, bien directement sur la tête endoscopique, bien relié à celle-ci par au moins une fibre optique, permettant ainsi d'éclairer les sujets d'inspection pour leur inspection visuelle.

Toutefois, dans certains cas, une simple inspection visuelle est insuffisante pour déterminer j'état d'intégrité d'une pièce mécanique. Ainsi, certains défauts cachés à une simple inspection visuelle peuvent être décelés grâce à un contrôle fréquentiel, dit aussi « ping test », Dans un tel contrôle fréquentiel, le sujet d'inspection est soumis à au moins une impulsion pour déclencher une vibration et l'analyse des fréquences de cette réponse mécanique vibratoire permet de déceler d'éventuels défauts dans le sujet d'inspection ou simplement de caractériser ce sujet d'inspection. Dans sa version la plus simple, un inspecteur frappe légèrement le sujet d'inspection et écoute le son émis par celui-ci en réponse.

Toutefois, dans l'état de la technique, pour effectuer un tel contrôle fréquentiel sur une pièce difficilement accessible, il est souvent nécessaire de la démonter, ce qui peut être très coûteux en temps et main d'oeuvre. En outre, la réalisation du contrôle fréquentiel sur une pièce démontée peut nuire à sa représentativité. Bien que des endoscopes avec dispositifs d'imagerie ultrasonique soient connus de la personne du métier, par exemple par la divulgation dans le fascicule de demande de brevet européen EP 2 596 753 A1, ces dispositifs sont plus complexes, et donc coûteux et fragiles, que ce qui est requis pour un simple contrôle fréquentiel.

### Objet et résumé de l'invention

La présente invention vise à remédier à ces inconvénients. En particulier, la présente divulgation vise à proposer un endoscope qui permette d'effectuer non seulement un contrôle visuel, mais aussi un contrôle fréquentiel d'une pièce difficilement accessible.

Dans au moins un mode de réalisation, ce but est atteint grâce au fait que la tête endoscopique de l'endoscope comprend un dispositif de contrôle fréquentiel comprenant au moins un capteur de vibrations, un élément de contact pour l'excitation mécanique d'un sujet de contrôle fréquentiel par simple impact, et un actionneur pour effectuer une impulsion unique dudit élément de contact contre le sujet de contrôle fréquentiel.

Grâce à ces dispositions, cette tête endoscopique peut être guidée visuellement vers un sujet de contrôle fréquentiel difficilement accessible, pour mettre cette pièce à portée du capteur de vibrations et de l'élément de contact afin d'effectuer un contrôle fréquentiel de ce sujet.

Le dispositif de contrôle fréquentiel peut en particulier comprendre au moins un microsystème électromécanique, incluant le capteur de vibrations et/ou au moins l'actionneur de l'élément de contact pour l'excitation mécanique du sujet de contrôle fréquentiel, ce qui permet de limiter l'encombrement de la tête endoscopique afin de permettre son accès à des endroits particulièrement inaccessibles.

Pour permettre une capture particulièrement précise de la réponse vibratoire du sujet d'inspection, le capteur de vibrations peut notamment être un microphone.

Afin de permettre le contournement d'obstacles dans la trajectoire de la tête endoscopique, l'endoscope peut être un endoscope flexible, c'est à dire un endoscope dont ledit organe allongé peut fléchir de, par exemple, au moins 30°. Alternativement, toutefois, l'endoscope peut être un endoscope rigide, c'est-à-dire un endoscope dont l'organe allongé ne peut pas fléchir de cette manière.

L'endoscope peut être un endoscope optique, c'est-à-dire un endoscope dans lequel la tête endoscopique est reliée au dispositif d'affichage d'images à travers au moins une fibre optique. Alternativement, toutefois, l'endoscope peut être un endoscope vidéo, c'est-à-dire un endoscope dans lequel la tête endoscopique comprend un capteur vidéo connecté au dispositif d'affichage d'images.

Bien sûr, l'endoscope peut comprendre en outre un dispositif d'éclairage. En particulier, ce dispositif d'éclairage peut être monté directement sur la tête endoscopique, ou connecté à celle-ci à travers au moins une fibre optique.

Par ailleurs, l'actionneur peut être distinct du capteur de vibrations, mais peut également être combiné avec celui-ci, notamment si l'actionneur est un actionneur piézoélectrique, magnétique ou électromécanique. D'autre part, d'autres types d'actionneurs, notamment les actionneurs pneumatiques et les ressorts élastiques, peuvent également être envisagés pour impulser le percuteur.
Alternativement à l'incorporation de l'élément de contact et l'actionneur sur la même tête endoscopique que le capteur de vibrations, la présente divulgation concerne aussi un ensemble comprenant un premier endoscope avec une tête endoscopique comprenant un dispositif de contrôle fréquentiel avec un capteur de vibrations, un dispositif d'affichage d'images captées à travers cette tête endoscopique, et un organe allongé relié à cette tête endoscopique, ainsi qu'un deuxième endoscope comprenant une tête endoscopique avec au moins un élément de contact pour l'excitation mécanique du sujet de contrôle fréquentiel par simple impact, un actionneur pour effectuer une impulsion unique de l'élément de contact contre le sujet de
contrôle fréquentiel, un dispositif d'affichage d'images captées à travers la tête endoscopique du deuxième endoscope, et un organe allongé relié à la tête endoscopique dudit deuxième endoscope. Un unique dispositif peut éventuellement servir à l'affichage d'images du premier et du deuxième endoscope, de manière à mutualiser des ressources, et tant le premier comme le deuxième endoscope peuvent être des endoscopes optiques ou vidéo, flexibles ou rigides. Tous les types d'actionneurs susmentionnés sont également envisageables dans cette alternative.

L'invention concerne également un procédé d'utilisation de cet endoscope pour un contrôle fréquentiel d'un sujet d'inspection. Dans au moins un mode de réalisation ce procédé peut comprendre l'approche visuellement guidée de la tête endoscopique au sujet d'inspection grâce aux images affichées par le dispositif d'affichage d'images captées à travers ladite tête endoscopique, l'excitation du sujet d'inspection par impulsion unique de l'élément de contact, par l'actionneur, contre le sujet d'inspection, afin de provoquer une réponse vibratoire au simple impact de l'élément de contact, et la réception de ladite réponse vibratoire, à travers le capteur de vibrations. La réponse vibratoire captée par le capteur de vibrations peut ensuite faire notamment l'objet d'une analyse fréquentielle pour déterminer l'état d'intégrité du sujet d'inspection.

### Brève description des dessins

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1A illustre schématiquement un endoscope suivant un premier mode de réalisation ;
- la figure 1B est une vue de détail de la tête endoscopique de l'endoscope de la figure 1A ;
- les figures 2A à 2C illustrent schématiquement des modes d'utilisation de l'endoscope de la figure 1A pour l'inspection de différentes pièces d'une turbomachine ;
- la figure 3 illustre schématiquement la tête endoscopique d'un endoscope suivant un deuxième mode de réalisation ;
- la figure 4 illustre schématiquement la tête endoscopique d'un endoscope suivant un troisième mode de réalisation ;
- la figure 5 illustre schématiquement la tête endoscopique d'un endoscope suivant un quatrième mode de réalisation ; et
- la figure 6 illustre schématiquement un ensemble d'un premier et un deuxième endoscope suivant un sixième mode de réalisation.

### Description détaillée de l'invention

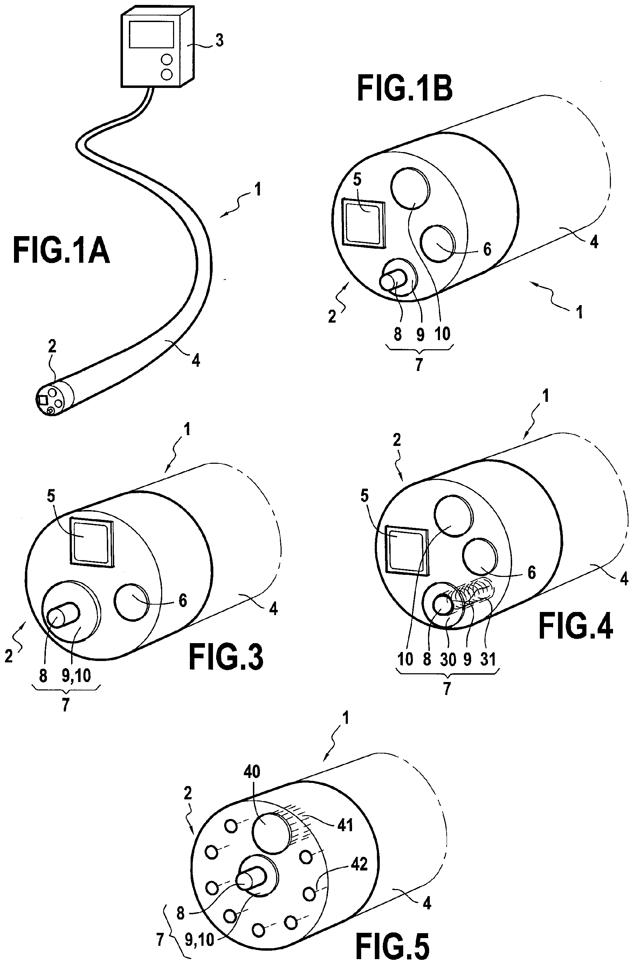

Un endoscope 1 suivant un premier mode de réalisation est illustré sur les figures 1A et 1B. Cet endoscope 1 comprend une tête endoscopique 2, un dispositif d'affichage 3, et un organe allongé 4 en forme de tige reliant la tête endoscopique 2 au dispositif d'affichage 3 et permettant l'insertion de la tête endoscopique 2 dans des espaces étroits tout en affichant à un utilisateur à l'extérieur, à travers le dispositif d'affichage 3, des images captées à travers cette tête endoscopique 2. Dans le mode de réalisation illustré, cet organe allongé 4 est flexible, pouvant fléchir d'au moins 30°, et possiblement d'au moins 90°, entre ses deux extrémités, afin de pouvoir contourner des obstacles dans la trajectoire de la tête endoscopique 2. Dans des modes de réalisation alternatifs, toutefois, cet organe allongé peut être sensiblement rigide.

La figure 1B illustre une vue détaillée de la tête endoscopique 2 de l'endoscope 1 suivant ce premier mode de réalisation. Ainsi, l'endoscope 1 suivant ce premier mode de réalisation est un endoscope vidéo, et on peut donc apprécier sur la tête endoscopique 2 un capteur vidéo 5, qui peut être, par exemple, un capteur du type DTC (« dispositif à transfert de charge », aussi connu comme CCD suivant son acronyme anglais) ou CMOS (« complementary metal oxide semiconductor », c'est-à-dire semiconducteur à oxydes métalliques complémentaires), un dispositif d'éclairage 6, qui peut être, par exemple, une diode électroluminescente" ainsi qu'un dispositif de contrôle fréquentiel 7 comprenant un élément de contact 8, un actionneur 9 apte à impulser l'élément de contact 8 contre un sujet de contrôle fréquentiel, et: un capteur de vibrations 10 apte à capter des vibrations du sujet de contrôle fréquentiel en réponse à son excitation mécanique par l'élément de contact 8. L'actionneur 9 peut être configuré pour effectuer une impulsion unique de l'élément de contact 8 contre le sujet de contrôle, de manière à exciter sa vibration par simple impact, ou bien pour le mettre en vibration contre le sujet de contrôle, Le matériau de l'élément de contact 8 peut être sélectionné en fonction de son utilisation. Ainsi, par exemple, l'élément de contact 8 peut être en un matériau comparativement dur, tel qu'une céramique ou un matériau métallique.

Dans ce premier mode de réalisation, l'actionneur 9 et le capteur de vibrations 10 sont deux microsystèmes électromécaniques distincts. L'actionneur 9 peut être, par exemple, piézoélectrique, électrostatique, ou électromagnétique, tandis que le capteur de vibrations 10 est un microphone pouvant aussi être, par exemple, piézoélectrique, électrostatique, ou électromagnétique. Alternativement, toutefois, l'actionneur 9 peut être un actionneur pneumatique, tandis que le capteur de vibrations 10 peut être un autre type de capteur de vibration avec ou sans contact, tel que, par exemple un accéléromètre ou vibromètre laser ou un microphone à fibre optique.

Le capteur vidéo 5 est connecté au dispositif d'affichage 3 à travers l'organe allongé 4, et l'actionneur 9 et le capteur de vibrations 10 peuvent également être connectés, à travers cet organe allongé 4, à des dispositifs de, respectivement, commande et analyse de signaux (non illustrés), pour pouvoir déclencher une impulsion de l'élément de contact 8 contre le sujet de contrôle fréquentiel et ensuite analyser les vibrations de ce sujet de contrôle fréquentiel en réponse à cette impulsion afin d'évaluer son intégrité. Ces connexions peuvent être filaires, par exemple électriques ou par fibre optique, ou bien sans fil, à travers des transpondeurs radio ou ultrasoniques, par exemple.

Ainsi, lors de son utilisation, la tête endoscopique 2 peut être introduite dans un espace restreint et difficilement accessible et guidée visuellement jusqu'au sujet de contrôle fréquentiel grâce aux images captées par le capteur vidéo 5 avec la lumière du dispositif d'éclairage 6. A proximité dudit sujet de contrôle fréquentiel, l'actionneur 9 peut être activé pour impulser l'élément de contact 8 contre le sujet de contrôle fréquentiel. Des vibrations sont déclenchées dans le sujet de contrôle fréquentiel par cette impulsion, et ces vibrations sont captées par le capteur 10 afin d'être éventuellement transmises à travers l'organe allongé 4 pour leur analyse servant à déterminer "intégrité du sujet de contrôle fréquentiel.

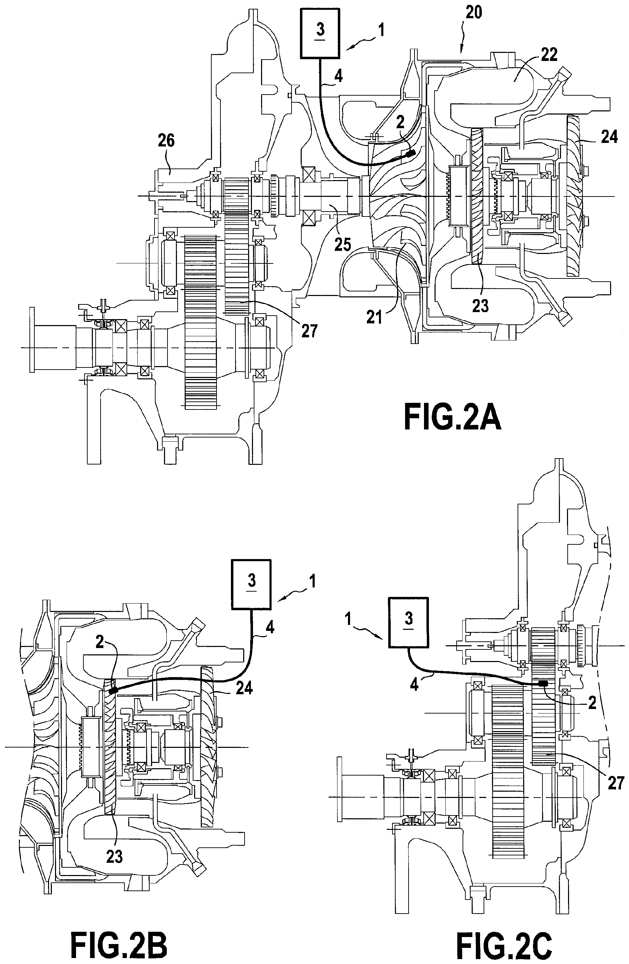

Les figures 2A à 2C illustrent des exemples d'application de cet endoscope et procédé de contrôle fréquentiel dans l'inspection de pièces difficilement accessibles dans une turbomachine, plus spécifiquement un turbomoteur 20 comprenant un compresseur centrifuge 21, une chambre de combustion 22, une turbine axiale haute pression 23 solidaire en rotation du compresseur 21, une turbine axiale basse pression 24, un arbre de sortie de puissance 25 solidaire en rotation de la turbine axiale basse pression 24, et une transmission mécanique 26, reliée à l'arbre de sortie de puissance 25 et comprenant une suite de pignons 27 en engrènement,

Sur la figure 2A, on voit ainsi l'utilisation de l'endoscope 1 dans le contrôle visuel et fréquentiel de pales du compresseur centrifuge 21. Pour cela, la tête endoscopique a été introduite à travers la prise d'air du turbomoteur 20 et guidée vers le compresseur centrifuge 21. A part l'inspection visuelle des pales du compresseur 21 à travers le dispositif d'affichage 3 de l'endoscope 1, l'utilisateur peut également effectuer un contrôle fréquentiel en activant l'actionneur 9 pour impulser l'élément de contact 8 contre chaque pale, déclenchant des vibrations qui seront captées par le capteur de vibrations 10 pour ensuite être éventuellement analysées pour déceler des défauts qui ne seraient indécelables par une simple inspection visuelle,

Sur la figure 2B, on voit l'utilisation de l'endoscope 1 dans le contrôle visuel et fréquentiel de pales de la turbine axiale haute pression 23. Pour cela, la tête endoscopique 2 a été introduite à travers l'échappement du turbomoteur 20 et sa turbine axiale basse pression 24 vers la turbine axiale haute pression 23, Le contrôle visuel et fréquentiel des pales de la turbine axiale basse pression 24 peut donc être effectué de manière analogue à celui des pales du compresseur 21 illustré sur la figure 2A.

Sur la figure 2C, on voit l'utilisation de l'endoscope 1 dans le contrôle visuel et fréquentiel d'un pignon 27 de la transmission mécanique 26. Ici, après ouverture d'un couvercle d'inspection 28 dans la transmission mécanique 26, la tête endoscopique 2 y est introduite pour effectuer le contrôle visuel et fréquentiel du pignon 27, en conditions réelles d'engrènement, de manière analogue à ceux des pales des figures 2A et 2B.

Des modes de réalisation alternatifs sont également envisageables pour l'endoscope. Ainsi, sur la figure 3 est illustrée la tête endoscopique 2 d'un endoscope 1 suivant un deuxième mode de réalisation, dans lequel l'actionneur 9 et le capteur de vibrations 10 sont intégrés dans un seul microsystème électromécanique. Ainsi, le même élément piézoélectrique, électromagnétique ou électrostatique servant à impulser l'élément de contact 8 contre le sujet de contrôle fréquentiel sert aussi à capter ensuite la réponse vibratoire de ce sujet de contrôle fréquentiel. Le reste des éléments de cet endoscope 1 sont équivalents à ceux du premier mode de et reçoivent donc les mêmes références numériques.

Dans les deux modes de réalisation précédents, l'élément de contact est solidaire de son actionneur, ce qui limite sa portée. Dans le troisième mode de réalisation illustré sur la figure 4, l'élément de contact 8 est formé par une bille, retenue dans la tête endoscopique 2, contre l'action d'un ressort formant l'actionneur 9, par un électroaimant 30. La désactivation de cet électroaimant 30 provoque ainsi l'impulsion de l'élément de contact 8 contre le sujet de contrôle, qu'il va impacter de manière à provoquer sa réponse vibratoire par simple percussion ou impact. D'autres types d'actionneurs, comme par exemple des actionneurs pneumatiques ou magnétiques, sont toutefois aussi envisageables alternativement à celui-ci. L'élément de contact 8, même s'il peut s'éloigner de la tête endoscopique 2, reste toutefois attaché à celle-ci par un fil 31, évitant ainsi de contaminer l'espace dans lequel s'effectue l'inspection. Les autres éléments de l'endoscope 1 sont équivalents à ceux du premier mode de réalisation, et reçoivent en conséquence les mêmes références numériques,

Dans les trois modes de précédents, l'endoscope 1 est un endoscope vidéo. Il est toutefois également envisageable d'appliquer les mêmes principes à un endoscope optique, tel que celui du quatrième mode de réalisation, dont la tête endoscopique 2 est illustrée sur la figure 5. Ainsi, cette tête endoscopique 2 comporte non pas un capteur vidéo mais un objectif optique 40, relié au dispositif d'affichage à l'autre bout de l'organe allongé 4 par des fibres optiques 41. Ce dispositif d'affichage pourra donc être un simple viseur optique. Par ailleurs, pour limiter encore plus l'encombrement et la complexité de la tête endoscopique 2, le dispositif d'éclairage n'est pas monté sur celle-ci, mais aussi de l'autre bout de l'organe allongé 4, et l'organe allongé contient aussi d'autres fibres optiques 42 pour transmettre à la tête endoscopique la lumière émise par ce dispositif d'éclairage, Les autres éléments de cet endoscope 1. sont équivalents à ceux du deuxième mode de réalisation, et reçoivent en conséquence les mêmes références numériques.

Par ailleurs, il n'est pas indispensable que l'endoscope soit flexible.

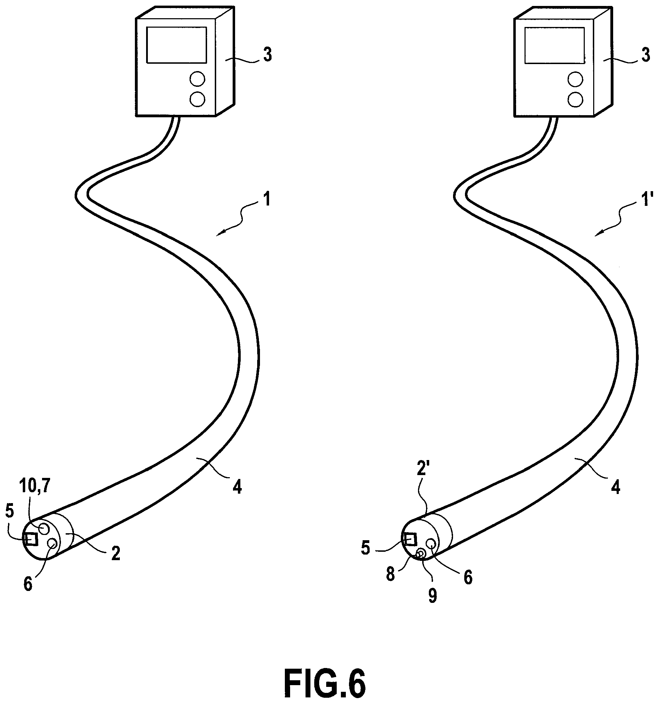

Il n'est pas non plus indispensable que les moyens destinés à provoquer la réponse vibratoire soient installés sur la même tête endoscopique que le capteur de vibrations destiné à la capter. Ainsi, dans un sixième mode de illustré sur la figure 6, on utilise un ensemble de deux endoscopes 1 et 1', Le premier endoscope 1 est analogue à celui du premier mode de réalisation à part l'absence de l'élément de contact 8 et l'actionneur 9 sur sa tête endoscopique 2. En effet, ces éléments sont rapportés sur la tête endoscopique 2' du deuxième endoscope 1', également analogue à celui du premier mode de sauf pour l'absence d'un capteur de vibrations. Il est ainsi possible, grâce à cet ensemble, de déclencher les vibrations du sujet de contrôle fréquentiel à un endroit, avec le deuxième endoscope 1' et capter ces vibrations à un autre endroit, avec le premier endoscope 1. Le reste des éléments des premier et deuxième endoscopes 1, 1' sont équivalents à ceux de l'endoscope 1 du premier mode de réalisation et reçoivent en conséquence les mêmes chiffres de référence.

Quoique la présente invention ait été décrite en se référant à des exemples de spécifiques, il est évident que des différentes modifications et changements peuvent être effectués sur ces exemples sans sortir de la portée générale de l'invention telle que définie par les revendications. En outre, des caractéristiques individuelles des différents modes de évoqués peuvent être combinées dans des modes de additionnels. En particulier, même si les deux endoscopes de l'ensemble du sixième mode de sont analogues à celui du premier mode de réalisation, on peut aussi incorporer dans chacun d'entre eux des caractéristiques des autres modes de réalisation alternativement ou en complément à celles illustrées. Par conséquent, la description et les dessins doivent être considérés dans un sens illustratif plutôt que restrictif.

## Revendications

1. Endoscope (1) comprenant :
une tête endoscopique (2) comprenant un dispositif (7) de contrôle fréquentiel avec un capteur de vibrations (10) ;
un dispositif (3) d'affichage d'images captées à travers ladite tête endoscopique (2) ; et
un organe allongé (4) relié à la tête endoscopique (2) ;
l'endoscope (1) étant **caractérisé en ce que** le dispositif (7) de contrôle fréquentiel comprend aussi, au moins, un élément de contact (8) pour l'excitation mécanique d'un sujet de contrôle fréquentiel par simple impact, et un actionneur (9) pour effectuer une impulsion unique dudit élément de contact (8) contre le sujet de contrôle fréquentiel.

2. Endoscope (1) suivant la revendication 1, dans lequel ledit dispositif de contrôle fréquentiel (7) comprend au moins un microsystème électromécanique.

3. Endoscope (1) suivant l'une quelconque des revendications précédentes, dans lequel ledit capteur de vibrations (10) est un microphone.

4. Endoscope (1) suivant l'une quelconque des revendications précédentes, dans lequel ledit organe allongé (4) peut fléchir d'au moins 30°.

5. Endoscope (1) suivant l'une quelconque des revendications précédentes, dans lequel ladite tête endoscopique (2) est reliée au dispositif d'affichage d'images (3) à travers au moins une fibre optique (41).

6. Endoscope (1) suivant l'une quelconque des revendications précédentes, dans lequel ladite tête endoscopique comprend un capteur vidéo (5) connecté au dispositif d'affichage d'images (3).

7. Endoscope (1) suivant l'une quelconque des revendications précédentes, comprenant en outre un dispositif d'éclairage (6).

8. Endoscope (1) suivant l'une quelconque des revendications précédentes, dans lequel ledit actionneur (9) est piézoélectrique.

9. Ensemble comprenant :
un premier endoscope (1) comprenant :
une tête endoscopique (2) avec un dispositif (7) de contrôle fréquentiel comprenant au moins un capteur de vibrations (10) ;
un dispositif (3) d'affichage d'images captées à travers ladite tête endoscopique (2) ;
un organe allongé (4) relié à la tête endoscopique (2) ; et ; et
un deuxième endoscope (1') comprenant :
une tête endoscopique (2') ;
un dispositif (3') d'affichage d'images captées à travers la tête endoscopique (2') dudit deuxième endoscope (1') ; et
un organe allongé (4') relié à la tête endoscopique (2') dudit deuxième endoscope (1') ;
l'ensemble étant **caractérisé en ce que** la tête endoscopique (2') dudit deuxième endoscope (1') comprend au moins un élément de contact (8) pour l'excitation mécanique d'un sujet de contrôle fréquentiel par simple impact et un actionneur (9) pour effectuer une impulsion unique dudit élément de contact (8) contre le sujet de contrôle fréquentiel.

10. Procédé d'utilisation d'un endoscope (1) suivant l'une quelconque des revendications 1 à 8 pour un contrôle fréquentiel d'un sujet d'inspection, comprenant les étapes suivantes :
approche visuellement guidée de la tête endoscopique (2) au sujet d'inspection grâce aux images affichées par le dispositif (3) d'affichage d'images captées à travers ladite tête endoscopique (2) ;
excitation mécanique du sujet d'inspection par impulsion unique de l'élément de contact (8), par l'actionneur (9), contre le sujet d'inspection, afin de provoquer une réponse vibratoire au simple impact de l'élément de contact (8) ;
réception de ladite réponse vibratoire, à travers le capteur de vibrations (10).

11. Procédé d'utilisation d'un ensemble suivant la revendication 9, pour un contrôle fréquentiel d'un sujet d'inspection, comprenant les étapes suivantes :
approche visuellement guidée des têtes endoscopiques (2,2') au sujet d'inspection grâce aux images affichées par le dispositif (3) d'affichage d'images captées à travers ladite tête endoscopique (2) ;
excitation mécanique du sujet d'inspection par impulsion unique de l'élément de contact (8), par l'actionneur (9), contre le sujet d'inspection, afin de provoquer une réponse vibratoire au simple impact de l'élément de contact (8) ;
réception de ladite réponse vibratoire, à travers le capteur de vibrations (10).

## Patentansprüche

1. Endoskop (1), umfassend:
einen Endoskopkopf (2), der eine Frequenzprüfungsvorrichtung (7) mit einem Schwingungssensor (10) umfasst,
eine Vorrichtung (3) zum Anzeigen von Bildern, die durch den Endoskopkopf (2) aufgenommen werden,
ein langgestrecktes Organ (4), das mit dem Endoskopkopf (2) verbunden ist, wobei das Endoskop (1) **dadurch gekennzeichnet ist, dass** die Frequenzprüfungsvorrichtung (7) auch wenigstens ein Kontaktelement (8) zum mechanischen Anregen eines Frequenzprüfungsgegenstandes durch einfaches Auftreffen sowie einen Aktor (9) zum Bewirken eines einzelnen Impulses des Kontaktelements (8) gegen den Frequenzprüfungsgegenstand umfasst.

2. Endoskop (1) nach Anspruch 1, bei dem die Frequenzprüfungsvorrichtung (7) wenigstens ein elektromechanisches Mikrosystem umfasst.

3. Endoskop (1) nach einem der vorhergehenden Ansprüche, bei dem der Schwingungssensor (10) ein Mikrofon ist.

4. Endoskop (1) nach einem der vorhergehenden Ansprüche, bei dem das langgestreckte Organ (4) sich um wenigstens 30° biegen kann.

5. Endoskop (1) nach einem der vorhergehenden Ansprüche, bei dem der Endoskopkopf (2) über wenigstens eine Lichtleitfaser (41) mit der Bildanzeigevorrichtung (3) verbunden ist.

6. Endoskop (1) nach einem der vorhergehenden Ansprüche, bei dem der Endoskopkopf einen Videosensor (5) umfasst, der mit der Bildanzeigevorrichtung (3) verbunden ist.

7. Endoskop (1) nach einem der vorhergehenden Ansprüche, ferner umfassend eine Beleuchtungsvorrichtung (6).

8. Endoskop (1) nach einem der vorhergehenden Ansprüche, bei dem der Aktor (9) piezoelektrisch ist.

9. Anordnung, umfassend:
ein erstes Endoskop (1), umfassend:
einen Endoskopkopf (2) mit einer Frequenzprüfungsvorrichtung (7), die wenigstens einen Schwingungssensor (10) umfasst,
eine Vorrichtung (3) zum Anzeigen von Bildern, die durch den Endoskopkopf (2) aufgenommen werden,
ein langgestrecktes Organ (4), das mit dem Endoskopkopf (2) verbunden ist,
und
ein zweites Endoskop (1'), umfassend:
einen Endoskopkopf (2'),
eine Vorrichtung (3') zum Anzeigen von Bildern, die durch den Endoskopkopf (2') des zweiten Endoskops (1') aufgenommen werden, und
ein langgestrecktes Organ (4'), das mit dem Endoskopkopf (2') des zweiten Endoskops (1') verbunden ist,
wobei die Anordnung **dadurch gekennzeichnet ist, dass** der Endoskopkopf (2') des zweiten Endoskops (1') wenigstens ein Kontaktelement (8) zum mechanischen Anregen eines Frequenzprüfungsgegenstandes durch einfaches Auftreffen sowie einen Aktor (9) zum Bewirken eines einzelnen Impulses des Kontaktelements (8) gegen den Frequenzprüfungsgegenstand umfasst.

10. Verfahren zur Verwendung eines Endoskops (1) nach einem der Ansprüche 1 bis 8 für eine Frequenzprüfung eines Prüfgegenstandes, umfassend die folgenden Schritte:
visuell geführte Annäherung des Endoskopkopfes (2) an den Prüfgegenstand mittels der Bilder, welche durch die Vorrichtung (3) zum Anzeigen von durch den Endoskopkopf (2) aufgenommenen Bildern angezeigt werden,
mechanische Anregung des Prüfgegenstandes durch den Aktor (9) mittels eines einzelnen Impulses des Kontaktelements (8) gegen den Prüfgegenstand, um eine Schwingungsantwort auf das einfache Auftreffen des Kontaktelements (8) zu bewirken,
Empfangen der Schwingungsantwort durch den Schwingungssensor (10)

11. Verfahren zur Verwendung einer Anordnung nach Anspruch 9 für eine Frequenzprüfung eines Prüfgegenstandes, umfassend die folgenden Schritte:
visuell geführte Annäherung der Endoskopköpfe (2, 2') an den Prüfgegenstand mittels der Bilder, welche durch die Vorrichtung (3) zum Anzeigen von durch den Endoskopkopf (2) aufgenommenen Bildern angezeigt werden,
mechanische Anregung des Prüfgegenstandes durch den Aktor (9) mittels eines einzelnen Impulses des Kontaktelements (8) gegen den Prüfgegenstand, um eine Schwingungsantwort auf das einfache Auftreffen des Kontaktelements (8) zu bewirken,
Empfangen der Schwingungsantwort durch den Schwingungssensor (10).

## Claims

1. An endoscope (1) comprising:
• an endoscopic head (2);
• an image display device (3) for displaying images picked up via said endoscopic head (2); and
• an elongate member (4) connected to the endoscopic head (2);
the endoscope being **characterized in that** said endoscopic head (2) also includes a frequency inspection device (7) comprising at least one vibration sensor (10), a contact element (8) for mechanically exciting a subject for frequency inspection by simple impact, and an actuator (9) for driving a single impulse of said contact element (8) against the subject for frequency inspection.

2. An endoscope (1) according to claim 1, wherein said frequency inspection device (7) comprises at least one electromechanical microsystem.

3. An endoscope (1) according to claim 1, wherein said vibration sensor (10) is a microphone.

4. An endoscope (1) according to claim 1, wherein said elongate member (4) can bend through at least 30°.

5. An endoscope (1) according to claim 1, wherein said endoscopic head (2) is connected to the image display device (3) via at least one optical fiber (41).

6. An endoscope (1) according to claim 1, wherein said endoscopic head includes a video sensor (5) connected to the image display device (3).

7. An endoscope (1) according to claim 1, further including a lighting device (6).

8. An endoscope (1) according to claim 1, wherein said actuator (9) is piezoelectric.

9. A set comprising:
• a first endoscope (1) comprising:
• an endoscopic head (2) with a frequency inspection device (7) including at least one vibration sensor (10);
• an image display device (3) for displaying images picked up via said endoscopic head (2); and
• an elongate member (4) connected to the endoscopic head (2); and
• a second endoscope (1') comprising:
an endoscopic head (2') with at least one contact element (8) for mechanically exciting a subject for frequency inspection by simple impact and an actuator (9) for driving a single impulse of said contact element (8) against the subject for frequency inspection;
• an image display device (3') for displaying images picked up via the endoscopic head (2') of said second endoscope (1'); and
• an elongate member (4') connected to the endoscopic head (2') of said second endoscope (1').

10. A method of using an endoscope (1) according to any one of claims 1 to 8, for frequency inspection of a subject for inspection, the method comprising the following steps:
• causing the endoscopic head (2) to approach the subject for inspection in guided manner;
• mechanically exciting the subject for inspection by driving a single impulse of the contact element (8) by means of the actuator (9) against the subject for inspection in order to give rise to a vibratory response to the simple impact of contact element (8); and
• receiving said vibratory response via the vibration sensor (10).

11. A method of using a set according to claim 9, for frequency inspection of a subject for inspection, the method comprising the following steps:
• causing the endoscopic heads (2, 2') to approach the subject for inspection in guided manner;
• mechanically exciting the subject for inspection by driving a single impulse of the contact element (8) by means of the actuator (9) against the subject for inspection in order to give rise to a vibratory response by the simple impact of the contact element (8); and
• receiving said vibratory response via the vibration sensor (10).
